(19) Europäisches Patentamt
European Patent Office
Office européen des brevets

(11) EP 3 390 528 B1

(12) FASCICULE DE BREVET EUROPEEN

(45) Date de publication et mention de la délivrance du brevet:
**17.03.2021 Bulletin 2021/11**

(21) Numéro de dépôt: **16825525.5**

(22) Date de dépôt: **15.12.2016**

(51) Int Cl.:
***C08L 23/10*** *(2006.01)*

(86) Numéro de dépôt international:
**PCT/FR2016/053478**

(87) Numéro de publication internationale:
**WO 2017/103509 (22.06.2017 Gazette 2017/25)**

(54) **COMPOSITION POLYMÈRE COMPRENANT UN LIQUIDE DIÉLECTRIQUE PRÉSENTANT UNE POLARITÉ AMÉLIORÉE**

POLYMERZUSAMMENSETZUNG MIT EINER DIELEKTRISCHEN FLÜSSIGKEIT MIT VERBESSERTER POLARITÄT

POLYMER COMPOSITION COMPRISING A DIELECTRIC LIQUID HAVING IMPROVED POLARITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2015 FR 1562782**

(43) Date de publication de la demande:
**24.10.2018 Bulletin 2018/43**

(73) Titulaire: **Nexans**
**92400 Courbevoie (FR)**

(72) Inventeurs:
- **PEREGO, Gabriele**
  **20144 Milan (IT)**
- **MAZEL, Christelle**
  **38300 Ruy (FR)**
- **MEYER, Matthias**
  **23552 Lübeck (DE)**
- **CHARRIER, Dimitri**
  **69130 Ecully (FR)**
- **FESTAZ, Xavier**
  **01800 Villieu-Loyes-Mollon (FR)**
- **COMBESSIS, Anthony**
  **13006 Marseille (FR)**

(74) Mandataire: **Ipsilon**
**Le Centralis**
**63, avenue du Général Leclerc**
**92340 Bourg-la-Reine (FR)**

(56) Documents cités:
**CN-A- 103 102 592**
**CN-A- 104 448 543**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 390 528 B1

## Description

L'invention concerne un câble comprenant une composition polymère comprenant au moins un matériau polymère thermoplastique et un liquide diélectrique présentant une polarité améliorée, et un procédé de préparation dudit câble.
L'invention s'applique typiquement mais non exclusivement aux câbles électriques destinés au transport d'énergie, notamment aux câbles d'énergie à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique.
Un câble de transport d'énergie à moyenne ou à haute tension comprend généralement de l'intérieur vers l'extérieur :

- un élément électriquement conducteur allongé, notamment en cuivre ou en aluminium ;
- une couche semi-conductrice interne entourant ledit élément électriquement conducteur allongé ;
- une couche électriquement isolante entourant ladite couche semi-conductrice interne ;
- une couche semi-conductrice externe entourant ladite couche isolante ; et
- éventuellement une gaine de protection électriquement isolante entourant ladite couche semi-conductrice externe.

En particulier, la couche électriquement isolante peut être une couche polymère à base d'une polyoléfine réticulée telle qu'un polyéthylène réticulé (XLPE) ou un élastomère réticulé d'éthylène-propylène ou d'éthylène-propylène-diène. La réticulation est généralement effectuée lors de l'étape d'extrusion de la composition polymère autour de l'élément électriquement conducteur allongé. L'utilisation d'une polyoléfine réticulée permet de fournir une couche présentant des propriétés électriques et mécaniques satisfaisantes et de conduire à un câble pouvant fonctionner à une température supérieure à 70°C, voire égale à 90°C. Toutefois, plusieurs problèmes sont rencontrés. D'une part, les matériaux réticulés ne peuvent pas être recyclés. D'autre part, la réticulation (vulcanisation) pour produire une couche homogène requiert des conditions de réaction spécifiques (e.g. en termes de durée et de température) qui réduisent la vitesse de fabrication du câble et augmentent son coût de production. Enfin, la réticulation peut parfois débuter de façon prématurée dans l'extrudeuse et/ou la tête d'extrudeuse, induisant une dégradation de la qualité de la couche obtenue, notamment de ses propriétés diélectriques.
Des alternatives ont donc été proposées telles qu'une couche thermoplastique de polyéthylène de faible densité (LDPE) ou de haute densité (HDPE). Toutefois, un câble comportant une telle couche électriquement isolante ne peut fonctionner à une température supérieure à 70°C environ pour une couche thermoplastique de LDPE et supérieure à 80°C pour une couche thermoplastique de HDPE, induisant une limitation de la puissance pouvant être transportée dans ledit câble et des méthodes de fabrication.
Il est également connu de fabriquer une couche électriquement isolante composée de plusieurs rubans de papier ou d'un composite papier-polypropylène imprégnés avec une grande quantité de liquide diélectrique (e.g. câble à papier imprégné d'huile). Le liquide diélectrique remplit complètement les espaces vides présents dans la couche et empêche les décharges partielles et l'endommagement de l'isolation du câble. Cependant, la fabrication de ce type de couche électriquement isolante est très complexe et coûteuse.
Le choix du liquide diélectrique va dépendre de l'application envisagée (i.e. du type d'équipement électrique) et de sa compatibilité avec l'isolant solide qu'il est censé imprégner et/ou avec lequel il forme un mélange intime. Parmi les liquides diélectriques conventionnels, on peut citer les huiles minérales (e.g. huiles naphténiques, huiles paraffiniques, huiles aromatiques ou huiles polyaromatiques), les huiles végétales (e.g. huile de soja, huile de lin, huile de colza, huile de maïs ou huile de ricin) ou les huiles synthétiques telles que les hydrocarbures aromatiques (alkylbenzènes, alkylnaphtalènes, alkylbiphényles, alkydiaryléthylènes, etc...), les huiles de silicone, les éther-oxydes, les esters organiques ou les hydrocarbures aliphatiques.
En particulier, la demande internationale WO 02/03398 A1 décrit un câble comprenant au moins un conducteur électrique et au moins une couche électriquement isolante extrudée basée sur un liquide diélectrique en mélange intime avec un matériau polymère thermoplastique comprenant un homopolymère de propylène ou un copolymère de propylène avec au moins un comonomère d'oléfine choisi parmi l'éthylène et une oléfine $\alpha$ différente du propylène. Le liquide diélectrique est un hydrocarbure aromatique comprenant au moins un hydrocarbure de type alkylaryle ayant au moins deux cycles aromatiques non condensés (e.g. dibenzyltoluène ou mélange de 85% en masse de monoxylylxylène et de 15% en masse de dixylylxylène). La demande internationale WO 02/03398 A1 indique que le liquide diélectrique est exempt de composés polaires afin d'absorber une quantité minimale d'eau et d'éviter la formation de défauts dans la

couche isolante liés à la présence de vapeur d'eau pendant l'extrusion à chaud. Toutefois, les hydrocarbures aromatiques (alkylbenzènes, alkylnaphtalènes, alkylbiphényles, alkydiaryléthylènes) présentent un coût élevé et induisent généralement des problèmes de sécurité et/ou d'environnement (e.g. certains hydrocarbures aromatiques sont considérés comme cancérigènes).

90 à 95% du marché des liquides diélectriques sont couverts par les huiles minérales en raison du faible coût de ces produits « naturels », obtenus directement par raffinage de bruts pétroliers. La composition chimique d'une huile minérale est extrêmement complexe (plusieurs milliers de molécules différentes) et peut varier dans de larges proportions. La composition chimique d'une huile minérale est donc généralement définie par sa teneur en carbone paraffinique (Cp), sa teneur en carbone naphténique (Cn) et sa teneur en carbone aromatique (Ca). Les huiles minérales peuvent également contenir un faible pourcentage de molécules d'hydrocarbures qui comprennent dans leur structure des hétéroatomes comme l'azote, le soufre ou l'oxygène (e.g. composés polaires). La teneur en composés polaires d'une huile minérale peut être déterminée selon la norme ASTM D2007-02. Toutefois, les huiles minérales présentent une stabilité à l'oxydation et une tenue diélectrique qui sont moins élevées par comparaison aux hydrocarbures aromatiques. Par ailleurs, il est connu de la demande internationale WO 2004/066318 A1 que les propriétés électriques d'un câble comprenant au moins un conducteur électrique et au moins une couche électriquement isolante extrudée basée sur un matériau polymère thermoplastique en mélange intime avec une huile minérale à titre de liquide diélectrique, peuvent être détériorées par la présence de ces composés polaires, notamment en termes de pertes diélectriques.

Il existe donc toujours un besoin en câbles électriques comprenant une couche électriquement isolante présentant des propriétés électriques comparables à celles obtenues avec une couche réticulée XLPE, tout en garantissant de bonnes propriétés mécaniques.

Ainsi, le but de la présente invention est de pallier les inconvénients de l'art antérieur et de fournir une composition polymère économique comprenant des matériaux recyclables, pouvant conduire à une couche électriquement isolante présentant des propriétés diélectriques améliorées, notamment en termes de rigidité diélectrique, tout en garantissant de faibles pertes diélectriques.

Le but de la présente invention est également de fournir un câble, en particulier à moyenne ou à haute tension, pouvant fonctionner à des températures supérieures à 70°C et présentant des propriétés électriques améliorées, notamment en termes de rigidité diélectrique, tout en garantissant de faibles pertes diélectriques.

Les buts sont atteints par l'invention qui va être décrite ci-après.

L'invention a pour premier objet un câble comprenant au moins un élément électriquement conducteur allongé, et au moins une couche électriquement isolante obtenue à partir d'une composition polymère, caractérisé en ce que la composition polymère comprend au moins un matériau polymère thermoplastique à base de polypropylène et un liquide diélectrique comprenant au moins une huile minérale et au moins un composé polaire de type benzophénone, acétophénone ou un de leurs dérivés.

La combinaison d'un composé polaire de type benzophénone, acétophénone ou d'un de leurs dérivés avec une huile minérale permet d'augmenter la rigidité diélectrique de la couche électriquement isolante d'un câble électrique tout en garantissant peu de pertes diélectriques. Par ailleurs, la présence d'un matériau polymère thermoplastique à base de polypropylène permet d'augmenter la température de fonctionnement du câble à 90°C-110°C.

Le liquide diélectrique peut comprendre au moins 70% en masse environ d'huile minérale, et de préférence au moins 80% en masse environ d'huile minérale, par rapport à la masse totale du liquide diélectrique.

L'huile minérale est généralement liquide à 20-25°C environ.

L'huile minérale peut être choisie parmi les huiles naphténiques et les huiles paraffiniques, et de préférence parmi les huiles naphténiques.

L'huile minérale est obtenue à partir du raffinage d'un brut pétrolier.

Selon une forme de réalisation particulièrement préférée de l'invention, l'huile minérale comprend une teneur en carbone paraffinique (Cp) allant de 45 à 65% atomique environ, une teneur en carbone naphténique (Cn) allant de 35 à 55% atomique environ et une teneur en carbone aromatique (Ca) allant de 0,5 à 10% atomique environ.

Dans un mode de réalisation particulier, le composé polaire de type benzophénone, acétophénone ou un de leurs dérivés représente au moins 2,5% en masse environ, de préférence au moins 3,5% en masse environ, et encore plus préférentiellement au moins 4% en masse environ, par rapport à la masse totale du liquide diélectrique. Grâce à cette quantité minimum de composé polaire, la rigidité diélectrique est améliorée.

Le liquide diélectrique peut comprendre au plus 30% en masse environ, de préférence au plus 20% en masse environ, et encore plus préférentiellement au plus 15% en masse environ, de composé polaire de type benzophénone, acétophénone ou un de leurs dérivés, par rapport à la masse totale du liquide diélectrique. Cette quantité maximale permet de garantir des pertes diélectriques modérées, voire faibles (e.g. inférieures à $10^{-3}$ environ), et également d'éviter la migration du liquide diélectrique hors de la couche électriquement isolante.

La quantité de composés polaires dans le liquide diélectrique peut être déterminée selon la norme ASTM D2007-02.

Le composé polaire de type benzophénone, acétophénone ou un de leurs dérivés peut répondre à la formule

(I) suivante :

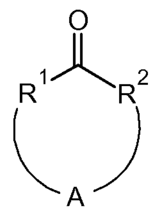

(I)

dans laquelle $R^1$ et $R^2$, identiques ou différents, sont des groupes aryles, alkyles, alkylène-aryles, les groupes $R^1$ et $R^2$ pouvant être reliés ensemble par l'élément A représentant une liaison simple ou un groupe $-(CH_2)_n-$ avec n égal à 1 ou 2.

Le groupe aryle peut comprendre un ou plusieurs cycles aromatiques, condensés ou non condensés, et de préférence non condensés.

Le groupe aryle peut comprendre de 5 à 20 atomes de carbone, et de préférence de 5 à 15 atomes de carbone.

Chaque cycle aromatique peut comprendre un ou plusieurs hétéroatomes tels qu'un atome d'azote, un atome de soufre ou un atome d'oxygène.

Chaque cycle aromatique peut être substitué par un ou plusieurs substituants X choisis parmi un atome d'halogène, un groupe alkyle ou un groupe alkoxy -O-alkyle. Un groupe alkyle est préféré.

L'atome d'halogène à titre de substituant X sur un cycle aromatique est de préférence un atome de chlore ou de fluor, et de préférence encore un atome de chlore.

Le groupe alkyle à titre de substituant X sur un cycle aromatique peut avoir de 1 à 10 atomes de carbone, de préférence de 1 à 5 atomes de carbone, et de préférence encore de 2 à 4 atomes de carbone.

Le groupe alkyle du groupe alkoxy -O-alkyle à titre de substituant X sur un cycle aromatique peut avoir de 1 à 10 atomes de carbone, de préférence de 1 à 5 atomes de carbone, et de préférence encore de 2 à 4 atomes de carbone.

Le ou les cycles aromatiques ne comprennent pas de préférence de substituants polaires protiques tels qu'un groupe -OH, un groupe -SH, un groupe -NH ou un groupe $-NH_2$.

Le groupe aryle est de préférence un groupe phényle, un groupe naphtyle ou un groupe pyridyle, et de préférence encore un groupe phényle.

Le groupe alkyle à titre de groupe $R^1$ et/ou $R^2$ peut avoir de 1 à 20 atomes de carbone, de préférence de 1 à 10 atomes de carbone, et de préférence encore de 1 à 5 atomes de carbone.

Dans la présente invention, le groupe alkyle peut être cyclique, linéaire ou ramifié.

Le groupe alkylène-aryle est un groupe mixte qui comprend un groupe aryle tel que défini dans la présente invention et un groupe alkylène. Le groupe alkylène du groupe alkylène-aryle est relié directement à la fonction cétone du composé de formule (I).

Le groupe alkylène peut être linéaire, cyclique ou ramifié, et de préférence linéaire.

En particulier, le groupe alkylène peut avoir de 1 à 5 atomes de carbone.

De préférence , le groupe alkylène est un groupe $-(CH_2)_p-$ avec $1 \leq p \leq 5$; un groupe $-(CHR)_{p1}-$ avec $1 \leq p_1 \leq 5$ et R étant un groupe alkyle, de préférence ayant de 1 à 5 atomes de carbone ; un groupe statistique $-(CHR)_{m1}-(CH_2)_{m2}-$ (i.e. comprenant $m_1$ $-CH_2-$ et $m_2$ -CHR-), avec $1 \leq m_1 + m_2 \leq 5$, et R étant un groupe alkyle, de préférence ayant de 1 à 5 atomes de carbone ; ou un groupe statistique $-(CHR)_{p2}-(CH_2)_{p3}-(CHR')_{p4}-$ (i.e. comprenant $p_2$ $-CH_2-$, $p_3$ -CHR- et $p_4$-CHR'-), avec $1 \leq p_2 + p_3 + p_4 \leq 5$, et R et R' étant des groupes alkyles différents, chacun ayant de préférence de 1 à 5 atomes de carbone, avec de préférence $1 \leq m_1 \leq 4$, $1 \leq m_2 \leq 4$, $1 \leq p_2 \leq 3$, $1 \leq p_3 \leq 3$ et $1 \leq p_4 \leq 3$.

Dans la présente invention, un groupe statistique signifie que les radicaux qui le constituent (e.g. $-CH_2-$, -CHR- et/ou -CHR'-) peuvent être aléatoirement positionnés au sein du groupe alkylène.

R (respectivement R') peut être un groupe méthyle, éthyle, propyle ou isopropyle.

Lorsque le groupe alkylène est ramifié (e.g. présence d'au moins l'un quelconque des groupes R ou R'), il peut également être relié *via* la ramification au groupe aryle dudit groupe alkylène-aryle.

Le groupe alkylène-aryle peut être un groupe benzyle (groupe alkylène-aryle dans lequel le groupe alkylène est un $CH_2$ et le groupe aryle est un phényle).

Le composé de formule (I) est de type benzophénone lorsque les groupes $R^1$ et $R^2$ sont des groupes aryles ; de type acétophénone lorsque l'un des groupes $R^1$ ou $R^2$ est un groupe aryle et l'autre est un groupe alkyle ; et un de leurs dérivés lorsque les groupes $R^1$ et $R^2$ sont des groupes alkyles ou l'un des groupes $R^1$ ou $R^2$ est un groupe alkylène-aryle et l'autre est un groupe alkyle, aryle ou alkylène-aryle.

Selon une première variante de l'invention, au moins l'un desdits groupes $R^1$ ou $R^2$ du composé de formule (I) est un groupe phényle.

Selon une deuxième variante de l'invention, les groupes $R^1$ et $R^2$ du composé de formule (I) sont des groupes

aryles. De préférence, au moins l'un d'entre eux comprenant un groupe phényle, et de préférence encore, les deux groupes aryles comprennent chacun un groupe phényle.

Selon une troisième variante, les groupes $R^1$ et $R^2$ du composé de formule (I) sont chacun des groupes phényles, de préférence non substitués.

Selon une forme de réalisation particulièrement préférée de l'invention, le composé de formule (I) peut être la benzophénone, la dibenzosubérone, la fluorénone ou l'anthrone, et de préférence la benzophénone.

Le rapport du nombre d'atomes de carbone aromatique sur le nombre total d'atomes de carbone dans le liquide diélectrique peut être inférieur à 0,3 environ ; et de préférence encore inférieur à 0,2 environ.

Grâce à ce faible rapport, les problèmes de sécurité liés à la toxicité du liquide diélectrique sont minimisés.

Le rapport du nombre d'atomes de carbone aromatique sur le nombre total d'atomes de carbone dans le liquide diélectrique peut être déterminé selon la norme ASTM D3238.

L'huile minérale peut comprendre un ou plusieurs composés polaires différents du composé polaire de type benzophénone, acétophénone ou un de leurs dérivés et en particulier différents du composé de formule (I).

On préfèrera toutefois que ces composés polaires différents du composé polaire de type benzophénone, acétophénone ou un de leurs dérivés ou différents du composé de formule (I) représentent au plus 2,5% en masse environ, et de préférence encore au plus 1,5% en masse environ, par rapport à la masse totale du liquide diélectrique.

Une huile contenant de telles proportions en composés polaires peut être une huile raffinée.

De préférence, le liquide diélectrique a un point d'ébullition supérieur à 250°C environ.

Ainsi, le liquide diélectrique de la composition polymère du câble de l'invention qui combine une huile minérale et un composé de type benzophénone, acétophénone ou un de leurs dérivés peut être manipulé sans risque à température ambiante (peu volatil) et aux températures requises par le procédé de mise en forme de la couche électriquement isolante (e.g. extrusion), tout en garantissant la formation d'un mélange intime homogène avec le matériau polymère de la composition polymère du câble de l'invention.

Le matériau polymère thermoplastique à base de polypropylène peut comprendre au moins un homopolymère ou un copolymère de propylène ($P_1$), et éventuellement au moins un homopolymère ou un copolymère d'oléfine $\alpha$ ($P_2$).

La combinaison de polymères $P_1$ et $P_2$ permet d'obtenir un matériau polymère thermoplastique présentant de bonnes propriétés mécaniques, notamment en termes de module élastique, et électriques.

En particulier, le copolymère de propylène $P_1$ peut être un copolymère statistique de propylène.

À titre d'exemples de copolymères de propylène $P_1$, on peut citer les copolymères de propylène et d'oléfine, l'oléfine étant notamment choisie parmi l'éthylène et une oléfine $\alpha$ différente du propylène.

L'oléfine $\alpha$ différente du propylène peut répondre à la formule $CH_2$=CH-$R^3$, dans laquelle $R^3$ est un groupe alkyle linéaire ou ramifié ayant de 2 à 10 atomes de carbone, notamment être choisie parmi les oléfines suivantes : 1-butène, 1-pentène ; 4-méthyl-1-pentène, 1-hexène, 1-octène, 1-décène, 1-dodécène, et un de leurs mélanges.

L'oléfine du copolymère de propylène et d'oléfine représente de préférence au plus 15% en mole et de préférence encore au plus 10% en mole du copolymère.

Les copolymères de propylène et d'éthylène sont préférés à titre de copolymère de propylène $P_1$.

Le copolymère de propylène $P_1$ a de préférence un module élastique allant de 600 à 1200 MPa environ.

L'homopolymère de propylène $P_1$ a de préférence un module élastique allant de 1250 à 1600 MPa environ.

L'homopolymère ou le copolymère de propylène $P_1$ peut avoir une température de fusion supérieure à 130°C environ, de préférence supérieure à 140°C environ, et de préférence encore allant de 140 à 165°C environ.

En particulier, l'homopolymère de propylène $P_1$ peut avoir une température de fusion de 165°C environ et le copolymère de propylène $P_1$ peut avoir une température de fusion allant de 140 à 150°C environ.

L'homopolymère ou le copolymère de propylène $P_1$ peut avoir une enthalpie de fusion allant de 30 à 100 J/g environ.

En particulier, l'homopolymère de propylène $P_1$ peut avoir une enthalpie de fusion allant de 80 à 90 J/g environ et le copolymère de propylène $P_1$ peut avoir une enthalpie de fusion allant de 30 à 70 J/g environ.

L'homopolymère ou le copolymère de propylène $P_1$ peut avoir un indice de fluidité allant de 0,5 à 3 g/10 min, mesuré à 230°C environ avec une charge de 2,16 kg environ selon la norme ASTM D1238-00.

Selon une forme de réalisation préférée de l'invention, l'homopolymère ou copolymère de propylène $P_1$ représente de 40 à 70% en masse environ du matériau polymère thermoplastique à base de polypropylène.

L'oléfine $\alpha$ de l'homopolymère ou du copolymère d'oléfine $\alpha$ $P_2$ peut répondre à la formule $CH_2$=CH-$R^4$, dans laquelle $R^4$ est un atome d'hydrogène ou un groupe alkyle linéaire ou ramifié ayant de 1 à 12 atomes de carbone, et notamment être choisie parmi les oléfines suivantes : éthylène, propylène, 1-butène, isobutylène, 1-pentène, 4-méthyl-1-pentène, 1-hexène, 1-octène, 1-décène, 1-dodécène, et un de leurs mélanges.

L'oléfine $\alpha$ propylène, 1-hexène ou 1-octène est préférée.

L'homopolymère ou le copolymère d'oléfine $\alpha$ $P_2$ peut être un copolymère hétérophasé comprenant une phase thermoplastique de type propylène et une phase élastomère thermoplastique de type copolymère d'éthylène et d'une oléfine $\alpha$, un polyéthylène ou un de leurs mélanges.

La phase élastomère thermoplastique du copolymère hétérophasé peut représenter au moins 20% en masse environ, et de préférence au moins 45% en masse environ, par rapport à la masse totale du copolymère hétérophasé.

L'oléfine $\alpha$ de la phase élastomère thermoplastique du copolymère hétérophasé peut être le propylène.

Le polyéthylène peut être un polyéthylène linéaire basse densité. Dans la présente invention, l'expression « polyéthylène linéaire basse densité » signifie un polyéthylène linéaire ayant une densité allant de 0,91 à 0,925 environ.

Selon une forme de réalisation préférée de l'invention, l'homopolymère ou copolymère d'oléfine $\alpha$ $P_2$ représente de 30 à 60% en masse environ du matériau polymère thermoplastique à base de polypropylène.

Le matériau polymère thermoplastique de la composition polymère du câble de l'invention est de préférence hétérophasé (i.e. il comprend plusieurs phases). La présence de plusieurs phases provient généralement du mélange de deux polyoléfines différentes, tel qu'un mélange de polypropylène et d'un copolymère de propylène ou de polyéthylène.

La composition polymère du câble de l'invention comprend un mélange intime homogène du liquide diélectrique et du matériau polymère thermoplastique (e.g. elle forme une phase homogène).

La concentration massique du liquide diélectrique dans la composition polymère est de préférence inférieure ou égale à la concentration massique de saturation dudit liquide diélectrique dans le matériau polymère thermoplastique.

La concentration massique de saturation à 20-25°C est généralement de l'ordre de 15 à 20% environ. Elle peut être déterminée par la méthode d'absorption liquide. En particulier, des plaques (e.g. de dimensions 200 mm x 200 mm x 0,5 mm) constituées du matériau polymère thermoplastique à base de polypropylène de la composition polymère sont préparées à partir des matières premières correspondantes, notamment par moulage. Des échantillons de ces plaques sont pesés (poids initial = $P_0$) puis immergés à 20°C environ dans le liquide diélectrique de la composition polymère. La concentration massique de saturation est mesurée en déterminant le changement de poids (en pourcentage) des échantillons après différentes durées d'immersion (e.g. 3, 6, 9, 12 et 15 jours) et après avoir nettoyé et séché leur surface (poids final = $P_f$). L'absorption du liquide diélectrique est déterminée selon la formule suivante :

$$\%\text{ d'absorption de liquide diélectrique} = [(P_f - P_0)/P_0] \times 100$$

La concentration de saturation est atteinte lorsque $P_f$ montre une variation inférieure à 1% par rapport à l'augmentation du poids total qui correspond à $P_f$-$P_0$.

Selon un mode de réalisation particulier, le liquide diélectrique représente de 1% à 20% en masse environ, de préférence de 2 à 15% en masse environ, et de préférence encore de 3 à 12% en masse environ, par rapport à la masse totale de la composition polymère.

Selon un mode de réalisation particulier, le composé polaire de type benzophénone, acétophénone ou un de leurs dérivés représente de 0,15 à 1,8% en masse environ, de préférence de 0,21 à 1,2% en masse environ, et de préférence encore de 0,24 à 0,9% en masse environ, par rapport à la masse totale de la composition polymère.

Selon un mode de réalisation particulier, le matériau polymère thermoplastique à base de polypropylène représente de 70% à 98% en masse environ, de préférence de 80 à 95% en masse environ, et de préférence encore de 88 à 97% en masse environ, par rapport à la masse totale de la composition polymère

La composition polymère peut comprendre en outre un ou plusieurs additifs.

Les additifs sont bien connus de l'homme du métier et peuvent être choisis parmi des antioxydants, des agents anti-UV, des agents anti-cuivre, des agents anti-arborescences d'eau, des pigments et un de leurs mélanges.

La composition polymère du câble de l'invention peut typiquement comprendre de 0,01 à 5% en masse environ, et de préférence de 0,1 à 2% en masse environ d'additifs, par rapport à la masse totale de la composition polymère.

Plus particulièrement, les antioxydants permettent de protéger la composition polymère des contraintes thermiques engendrées lors des étapes de fabrication du câble ou de fonctionnement du câble.

Les antioxydants sont choisis de préférence parmi les phénols encombrés, les thioesters, les antioxydants à base de soufre, les antioxydants à base de phosphore, les antioxydants de type amine et un de leurs mélanges.

À titre d'exemples de phénols encombrés, on peut citer le Pentaérythritol tétrakis(3-(3,5-di-*tert*-butyl-4-hydroxyphényl)propionate) (Irganox® 1010), l'octadécyl 3-(3,5-di-tert-butyl-4-hydroxyphényl)propionate (Irganox® 1076), le 1,3,5-triméthyl-2,4,6-tris(3,5-di-*tert*-butyl-4-hydroxybenzyl)benzène (Irganox® 1330), le 4,6-bis (octylthiométhyl)-o-crésol (Irgastab® KV10), le 2,2'-thiobis(6-tert-butyl-4-méthylphénol) (Irganox® 1081), le 2,2'- thiodiéthylène bis[3-(3,5-di-tert-butyl-4-hydroxyphényl) propionate] (Irganox® 1035), le 2,2'-méthylènebis(6-*tert*-butyl-4-méthylphénol), le 1,2-bis(3,5-di-tert-butyl-4-hydroxyhydrocinnamoyl) hydrazine (Irganox® MD 1024), ou le 2,2'-oxamido-bis(éthyl-3(3,5-di-*tert*-butyl-4-hydroxyphényle)propionate).

À titre d'exemples de thioesters, on peut citer le didodécyl-3,3'-thiodipropionate (Irganox® PS800), le distéaryl thiodipropionate (Irganox® PS802) ou le 4,6-bis(octylthiométhyle)-o-crésol (Irganox® 1520).

À titre d'exemples d'antioxydants à base de soufre, on peut citer le dioctadecyl-3,3'-thiodipropionate ou le didodecyl-3,3'-thiodipropionate.

À titre d'exemples d'antioxydants à base de phosphore, on peut citer le tris(2,4-di-tert-butyl-phényle)phosphite

(Irgafos® 168) ou le bis(2,4-di-*tert*-butylphényl)pentaérythritol diphosphite (Ultranox® 626).

À titre d'exemples d'antioxydants de type amine, on peut citer les phénylène diamines (e.g. 1PPD ou 6PPD), les diphénylamine styrène, les diphénylamines, les mercapto benzimidazoles et le 2,2,4-triméthyl-1,2 dihydroquinoline polymérisé (TMQ).

À titre d'exemples de mélanges d'antioxydants, on peut citer l'Irganox B 225 qui comprend un mélange équimolaire d'Irgafos 168 et d'Irganox 1010 tels que décrits ci-dessus.

La composition polymère est une composition polymère thermoplastique.

Elle n'est donc pas réticulable.

En particulier, la composition polymère ne comprend pas d'agents de réticulation, d'agents de couplage de type silane, de peroxydes et/ou d'additifs qui permettent une réticulation. En effet de tels agents dégradent le matériau polymère thermoplastique à base de polypropylène.

La composition polymère est de préférence recyclable.

La composition polymère du câble de l'invention peut être préparée selon un procédé comprenant au moins une étape i) de mélange d'un matériau polymère thermoplastique à base de polypropylène avec un liquide diélectrique tels que définis dans le premier objet de l'invention.

En particulier, le mélange est effectué selon les sous-étapes suivantes :

i-a) le mélange d'une huile minérale et d'au moins un composé polaire de type benzophénone, acétophénone ou un de leurs dérivés (tels que définis dans le premier objet de l'invention), afin de former un liquide diélectrique tel que défini dans le premier objet de l'invention, et

i-b) le mélange d'un matériau polymère thermoplastique à base de polypropylène tel que défini dans le premier objet de l'invention avec le liquide diélectrique tel qu'obtenu dans la sous-étape précédente i-a).

Le matériau polymère thermoplastique à base de polypropylène de la sous-étape i-b) est généralement sous la forme de granules de polymère(s), notamment de granules d'au moins un homopolymère ou un copolymère de propylène $P_1$ et éventuellement d'au moins un homopolymère ou un copolymère d'oléfine $\alpha$ $P_2$ tels que définis dans le premier objet de l'invention.

Le mélange de la sous-étape i-a) peut être effectué à l'aide de n'importe quel appareil permettant de dissoudre le composé polaire de type benzophénone, acétophénone ou un de leurs dérivés et éventuellement le ou les additifs (notamment lorsqu'ils sont sous la forme de poudres solides) dans l'huile minérale.

La sous-étape i-a) est de préférence effectuée à une température allant de 20 à 100°C environ, de préférence de 50 à 90°C environ, et de préférence encore à une température de 75°C environ.

La sous-étape i-a) dure généralement de 15 minutes à 1 heure, et de préférence de 20 à 30 minutes.

A l'issue de la sous-étape i-a), on obtient une solution stable et transparente.

Le mélange de la sous-étape i-a) peut comprendre en outre le ou les additifs tels que définis dans l'invention (e.g. antioxydant).

Le mélange de la sous-étape i-b) peut être effectué en mélangeant le liquide diélectrique obtenu à la sous-étape i-a) avec le matériau polymère thermoplastique à base de polypropylène ou les composés polymères qui le constituent, notamment à l'aide d'un mélangeur interne, notamment à rotors tangentiels ou à rotors engrenants, ou d'un mélangeur continu, notamment à vis ou contre rotatif double vis ou d'un mélangeur de type « Buss extruder ».

La sous-étape i-b) peut être effectuée par imprégnation de granules d'un matériau polymère thermoplastique à base de polypropylène tel que défini dans le premier objet de l'invention avec le liquide diélectrique, en particulier en mélangeant les granules de polymère avec le liquide diélectrique, en chauffant le mélange résultant afin que les granules absorbent le liquide diélectrique, en alimentant une extrudeuse à simple vis avec le mélange résultant et en homogénéisant à l'état fondu le mélange obtenu par agitation mécanique dans l'extrudeuse.

Au cours de la sous-étape i-b), la composition polymère du câble de l'invention peut être mise en forme, notamment sous la forme de granules.

Pour ce faire, la température au sein du mélangeur est choisie suffisante pour obtenir le matériau polymère thermoplastique à l'état fondu. Puis, le mélange homogène peut être granulé, par des techniques bien connues de l'homme du métier. Ces granulés peuvent ensuite alimenter une extrudeuse pour fabriquer le câble de l'invention selon un procédé tel que défini ci-après.

La couche électriquement isolante du câble de l'invention est une couche non réticulée.

La couche électriquement isolante de l'invention est de préférence une couche recyclable.

La couche électriquement isolante de l'invention peut être une couche extrudée, notamment par des procédés bien connus de l'homme du métier.

Dans la présente invention, on entend par « couche électriquement isolante » une couche dont la conductivité électrique peut être d'au plus $1.10^{-9}$ S/m, et de préférence d'au plus $1.10^{-10}$ S/m (siemens par mètre) (à 25°C).

Le câble de l'invention concerne plus particulièrement le domaine des câbles électriques fonctionnant en courant continu (DC) ou en courant alternatif (AC).

La couche électriquement isolante de l'invention peut entourer l'élément électriquement conducteur allongé.

L'élément électriquement conducteur allongé peut être un conducteur monocorps tel que par exemple un fil métallique ou un conducteur multicorps tel qu'une pluralité de fils métalliques torsadés ou non.

L'élément électriquement conducteur allongé peut être en aluminium, en alliage d'aluminium, en cuivre, en alliage de cuivre, et en un de leurs combinaisons.

Selon une forme de réalisation préférée de l'invention, le câble électrique peut comprendre :

- une première couche semi-conductrice entourant l'élément électriquement conducteur allongé,
- une couche électriquement isolante entourant la première couche semi-conductrice, ladite couche électriquement isolante étant telle que définie dans l'invention, et
- une deuxième couche semi-conductrice entourant la couche électriquement isolante.

Dans la présente invention, on entend par « couche semi-conductrice » une couche dont la conductivité électrique peut être d'au moins $1.10^{-9}$ S/m (siemens par mètre), de préférence d'au moins $1.10^{-3}$ S/m, et de préférence peut être inférieure à $1.10^{3}$ S/m (à 25°C).

Dans un mode de réalisation particulier, la première couche semi-conductrice, la couche électriquement isolante et la deuxième couche semi-conductrice constituent une isolation tricouche. En d'autres termes, la couche électriquement isolante est en contact physique direct avec la première couche semi-conductrice, et la deuxième couche semi-conductrice est en contact physique direct avec la couche électriquement isolante.

Le câble peut comprendre en outre une gaine électriquement isolante entourant la deuxième couche semi-conductrice, et peut être en contact physique direct avec celle-ci.

Le câble électrique peut comprendre en outre un écran métallique entourant la deuxième couche semi-conductrice. Dans ce cas, la gaine électriquement isolante entoure ledit écran métallique.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice ou un ruban métallique conducteur en aluminium posé longitudinalement autour de la deuxième couche semi-conductrice et rendu étanche grâce à de la colle dans les zones de chevauchement de parties dudit ruban, ou d'un écran dit « étanche » de type tube métallique composé éventuellement de plomb ou d'alliage de plomb et entourant la deuxième couche semi-conductrice. Ce dernier type d'écran permet notamment de faire barrière à l'humidité ayant tendance à pénétrer le câble électrique en direction radiale.

L'écran métallique du câble électrique de l'invention peut comprendre un écran dit « filaire » et un écran dit « étanche » ou un écran dit « filaire » et un écran dit « rubané ».

Tous les types d'écrans métalliques peuvent jouer le rôle de mise à la terre du câble électrique et peuvent ainsi transporter des courants de défaut, par exemple en cas de court-circuit dans le réseau concerné.

D'autres couches, telles que des couches gonflantes en présence d'humidité peuvent être ajoutées entre la deuxième couche semi-conductrice et l'écran métallique, ces couches permettant d'assurer l'étanchéité longitudinale du câble électrique à l'eau.

L'invention a pour deuxième objet un procédé de fabrication d'un câble électrique conforme au premier objet de l'invention, caractérisé en ce qu'il comprend au moins une étape 1) d'extrusion de la composition polymère telle que définie dans le premier objet de l'invention autour d'un élément électriquement conducteur allongé, pour obtenir une couche électriquement isolante (extrudée) entourant ledit élément électriquement conducteur allongé.

L'étape 1) peut être réalisée par des techniques bien connues de l'homme du métier, par exemple à l'aide d'une extrudeuse.

Lors de l'étape 1), la composition en sortie d'extrudeuse est dite « non réticulée », la température ainsi que le temps de mise en œuvre au sein de l'extrudeuse étant optimisés en conséquent.

En sortie d'extrudeuse, on obtient donc une couche extrudée autour dudit élément électriquement conducteur, pouvant être ou non, directement en contact physique avec ledit élément électriquement conducteur allongé.

Le procédé ne comprend pas de préférence d'étape de réticulation de la couche obtenue à l'étape 1).

La figure 1 représente une vue schématique d'un câble électrique selon un mode de réalisation préféré conforme à l'invention.

La figure 2 représente les courbes de la tangente delta (tan(5)) à 90°C en fonction de la fréquence (Hz), pour une

couche selon l'invention et pour une couche comparative.

Pour des raisons de clarté, seuls les éléments essentiels pour la compréhension de l'invention ont été représentés de manière schématique, et ceci sans respect de l'échelle.
Le câble d'énergie 1 à moyenne ou haute tension, illustré dans la figure 1, comprend un élément électriquement conducteur 2 allongé central, notamment en cuivre ou en aluminium. Le câble d'énergie 1 comprend en outre plusieurs couches disposées successivement et coaxialement autour de cet élément électriquement conducteur allongé central 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.
La couche 4 électriquement isolante est une couche extrudée non réticulée, obtenue à partir de la composition polymère selon l'invention.
Les couches semi-conductrices 3 et 5 sont des couches extrudées thermoplastiques (i.e. non réticulées).
La présence de l'écran métallique 6 et de la gaine extérieure de protection 7 est préférentielle, mais non essentielle, cette structure de câble étant en tant que telle bien connue de l'homme du métier.

**EXEMPLES**

1. Compositions polymères

Le tableau 1 ci-dessous rassemble des compositions polymères dont les quantités des composés sont exprimées en pourcentages en poids par rapport au poids total de la composition polymère.
Les compositions C1 et C2 sont des compositions comparatives, et les compositions I1 et I2 sont conformes à l'invention.

**TABLEAU 1**

| **Compositions polymères** | **C1** | **C2** | **I1** | **I2** |
|---|---|---|---|---|
| Copolymère de propylène | 100 | 100 | 100 | 100 |
| Polyéthylène linéaire de faible densité | 50 | 50 | 50 | 0 |
| Copolymère de propylène hétérophasé | 50 | 50 | 50 | 100 |
| Huile minérale | 0 | 12 | 12 | 12 |
| benzophénone | 0 | 0 | 0,7 | 0,7 |
| antioxydant | 0.7 | 0,7 | 0,7 | 0,7 |

L'origine des composés du tableau 1 est la suivante :

- copolymère de propylène statistique commercialisé par la société Borealis sous la référence Bormed RB 845 MO ;
- polyéthylène linéaire de faible densité commercialisé par la société Exxon Mobil Chemicals sous la référence LLDPE LL 1002 YB ;
- copolymère hétérophasé commercialisé par la société Basell Polyolefins sous la référence Adflex Q 200F ;
- huile minérale commercialisée par la société Nynas sous la référence Nytex 810, l'huile comprend 10% d'atomes de carbone aromatique, 43% d'atomes de carbone naphténique et 47% d'atomes de carbone paraffinique ;
- antioxydant commercialisé par la société Ciba sous la référence Irganox B 225 qui comprend un mélange équimolaire d'Irgafos 168 et d'Irganox 1010 ; et
- benzophénone commercialisée par la société Sigma-Aldrich sous la référence B9300.

2. Préparation des couches non réticulées

Les compositions rassemblées dans le tableau 1 sont mises en œuvre comme suit.

102 ml d'huile minérale, 6 g d'antioxydant et 6 g de benzophénone ont été mélangés sous agitation à 75°C environ, afin de former un liquide diélectrique.

Le liquide diélectrique a ensuite été mélangé avec 850 g de copolymère de propylène, 425 g de polyéthylène linéaire de faible densité et 425 g de copolymère hétérophasé dans un récipient, puis le mélange résultant a été homogénéisé à l'aide d'une extrudeuse à double vis (« Berstorff twin screw extruder ») à une température de 145 à 180°C environ, puis fondu à 200°C environ (vitesse des vis : 80 tours/min).

Le mélange homogénéisé et fondu a été ensuite mis sous la forme de granulés.

Des câbles ont été fabriqués avec une extrudeuse de laboratoire et soumis à des caractérisations électriques. Chacun des câbles comprenait :

- un élément électriquement conducteur de section transversale de 1,4 mm,
- une première couche semi-conductrice entourant ledit élément électriquement conducteur,
- une couche électriquement isolante obtenue à partir de la composition polymère de l'invention ou d'une composition polymère comparative entourant ladite première couche semi-conductrice, et
- une deuxième couche semi-conductrice entourant ladite couche électriquement isolante.

Les câbles avaient un diamètre total extérieur de 6,1 mm environ et une longueur totale de 3,64 m environ. Ils ont été dénudés de la deuxième couche semi-conductrice selon une épaisseur de 150 μm et une longueur de 87 cm.

La couche électriquement isolante avait une épaisseur de 1,5 mm (rayon interne et externe respectivement de 1,4 mm et 2,9 mm).

Les couches semi-conductrices étaient des couches thermoplastiques présentant la composition suivante : 48% en masse de copolymère de propylène statistique (Bormed RB 845 MO) ; 20% en masse d'un copolymère hétérophasé (Adflex Q 200F) ; 25% en masse de noir de carbone (Vulcan XC 500) ; 6,5% en masse d'une huile minérale (Nytex 810) et 0,5% en masse d'antioxydant.

3. Caractérisation des couches non réticulées

La rigidité diélectrique des couches a été mesurée en appliquant sur l'élément électriquement conducteur du câble une rampe de tension AC à 50 Hz à 2 kV/s. La deuxième couche semi-conductrice était connectée à la terre. Les deux terminaisons ont été immergées dans de l'eau distillée.

Une analyse statistique (modèle de Weibull) a été effectuée sur 10 valeurs expérimentales de rigidité diélectrique obtenues.

La tangente delta (tan5) (ou facteur de perte) à 25°C, 90°C et 130°C des couches telles que préparées ci-avant a été mesurée par spectroscopie diélectrique à l'aide d'un appareil vendu sous la dénomination commerciale Alpha-A par la société Novocontrol Technologies.

La tangente de l'angle de perte donne une indication sur l'énergie dissipée dans un diélectrique sous forme de chaleur.

Les essais ont été effectués sur des échantillons d'épaisseur proche de 0,5 mm, sur une gamme de fréquences de 40 à 60 Hz avec une tension de 500 V adaptée selon l'épaisseur l'échantillon testé, afin d'appliquer un champ électrique de 1 kV/mm. Une température de 25°C, 90°C ou 130°C a été appliquée durant les différents essais.

Des essais de résistance au blanchiment sous contrainte ont également été effectués en soumettant des échantillons d'épaisseur proche de 1 mm à un test mécanique tel qu'un test de courbure de l'échantillon à température ambiante avec un rayon de courbure de 5 mm.

4. Résultats

Les résultats de tangente delta obtenus sont rassemblés dans les figures 2A (couche obtenue à partir de la composition C1) et 2B (couche obtenue à partir de la composition I1).

La figure 2 représente la tangente delta (tan(5)) (ou tangente de l'angle de perte) à 25°C (courbes avec les losanges pleins), à 90°C (courbes avec les carrés pleins), et à 130°C (courbes avec les triangles pleins) en fonction de la fréquence (Hz), pour la couche non réticulée comparative (figure 2A) et pour la couche non réticulée selon l'invention (figure 2B).

On remarque clairement que la couche obtenue à partir de la composition I1 selon l'invention présente des pertes diélectriquement très légèrement supérieures à celles obtenues avec la composition comparative C1, notamment à 130°C mais qui restent très acceptables.

Les résultats à 50 Hz sont rassemblés dans le tableau 2 suivant :

**TABLEAU 2**

| Compositions | C1 | C2 | I1 |
|---|---|---|---|
| Tangente delta à 25°C | 1,2 x $10^{-4}$ | 9,4 x $10^{-5}$ | 1,2 x $10^{-4}$ |
| Tangente delta à 90°C | 7,5 x $10^{-5}$ | 5,41 x $10^{-5}$ | 8,2 x $10^{-5}$ |
| Laboratory cable Dielectric breakdown strength (kV/mm) | 103 | 112 | 137 |

Le tableau 2 montre que les compositions polymères selon l'invention présentent de meilleures propriétés diélectriques (i.e. meilleure isolation électrique). En particulier, la rigidité diélectrique de la couche de l'invention I1 est améliorée, par rapport à celle des compositions comparatives C1 et C2.

La couche obtenue à partir de la composition I1 n'a par ailleurs montré aucun blanchiment sous contrainte alors que la couche obtenue à partir de la composition comparative C1 s'est montré peu résistante puisque une marque blanche au niveau de la courbure est apparue immédiatement en réponse à la contrainte manuelle appliquée.

## Revendications

1. Câble comprenant au moins un élément électriquement conducteur allongé, et au moins une couche électriquement isolante obtenue à partir d'une composition polymère, **caractérisé en ce que** la composition polymère comprend au moins un matériau polymère thermoplastique à base de polypropylène, et un liquide diélectrique comprenant au moins une huile minérale et au moins un composé polaire de type benzophénone, acétophénone ou un de leurs dérivés.

2. Câble selon la revendication 1, **caractérisé en ce que** le liquide diélectrique comprend au moins 70 % en masse d'huile minérale, par rapport à la masse totale du liquide diélectrique.

3. Câble selon la revendication 1 ou 2, **caractérisé en ce que** l'huile minérale est choisie parmi les huiles naphténiques et les huiles paraffiniques.

4. Câble selon l'une quelconque des revendications précédentes, **caractérisé en ce que** le composé polaire de type benzophénone, acétophénone ou un de leurs dérivés représente au moins 2,5% en masse, par rapport à la masse totale du liquide diélectrique.

5. Câble selon l'une quelconque des revendications précédentes, **caractérisé en ce que** le composé polaire de type benzophénone, acétophénone ou un de leurs dérivés répond à la formule (I) suivante :

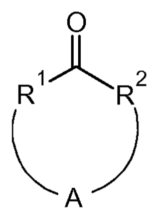

(I)

dans laquelle $R^1$ et $R^2$, identiques ou différents, sont des groupes aryles, alkyles, alkylène-aryles, les groupes $R^1$ et $R^2$ pouvant être reliés ensemble par l'élément A représentant une liaison simple ou un groupe $-(CH_2)_n-$ avec n égal à 1 ou 2.

6. Câble selon la revendication 5, **caractérisé en ce que** le composé de formule (I) est la benzophénone, la dibenzosubérone, la fluorénone ou l'anthrone.

7. Câble selon l'une quelconque des revendications précédentes, **caractérisé en ce que** le rapport du nombre d'atomes de carbone aromatique sur le nombre total d'atomes de carbone dans le liquide diélectrique est inférieur à 0,3.

8. Câble selon l'une quelconque des revendications précédentes, **caractérisé en ce que** le liquide diélectrique représente de 1% à 20% en masse, par rapport à la masse totale de la composition polymère.

9. Câble selon l'une quelconque des revendications précédentes, **caractérisé en ce que** le matériau polymère thermoplastique à base de polypropylène comprend au moins un homopolymère ou un copolymère de propylène $P_1$, et au moins un homopolymère ou un copolymère d'oléfine $\alpha$ $P_2$.

10. Câble selon la revendication 9, **caractérisé en ce que** le copolymère de propylène $P_1$ est un copolymère de propylène et d'éthylène.

11. Câble selon la revendication 9 ou 10, **caractérisé en ce que** l'homopolymère ou copolymère de propylène $P_1$ représente de 40 à 70% en masse du matériau polymère thermoplastique à base de polypropylène.

12. Câble selon l'une quelconque des revendications 9 à 11, **caractérisé en ce que** l'homopolymère ou le copolymère d'oléfine $\alpha$ $P_2$ est un copolymère hétérophasé comprenant une phase thermoplastique de type propylène et une phase élastomère thermoplastique de type copolymère d'éthylène et d'une oléfine a, un polyéthylène ou un de leurs mélanges.

13. Câble selon l'une quelconque des revendications 9 à 12, **caractérisé en ce que** l'homopolymère ou copolymère d'oléfine $\alpha$ $P_2$ représente de 30 à 60% en masse du matériau polymère thermoplastique à base de polypropylène.

14. Câble selon l'une quelconque des revendications précédentes, **caractérisé en ce que** la couche électriquement isolante est une couche non réticulée.

15. Procédé de fabrication d'un câble électrique tel que défini à l'une quelconque des revendications précédentes, **caractérisé en ce qu'**il comprend au moins une étape 1) d'extrusion de la composition polymère autour d'un élément électriquement conducteur allongé, pour obtenir une couche électriquement isolante entourant ledit élément électriquement conducteur allongé.

16. Procédé selon la revendication 15, **caractérisé en ce que** la composition polymère est préparée selon un procédé comprenant au moins une étape i) de mélange dudit matériau polymère thermoplastique à base de polypropylène avec ledit liquide diélectrique.

17. Procédé selon la revendication 16, **caractérisé en ce que** le mélange est effectué selon les sous-étapes suivantes :

    i-a) le mélange d'une huile minérale et d'au moins un composé polaire de type benzophénone, acétophénone ou un de leurs dérivés, afin de former un liquide diélectrique, et
    i-b) le mélange dudit matériau polymère thermoplastique à base de polypropylène avec le liquide diélectrique tel qu'obtenu dans la sous-étape précédente i-a).

**Patentansprüche**

1. Kabel, umfassend mindestens ein längliches elektrisch leitendes Element und mindestens eine elektrisch isolierende Schicht, die aus einer Polymerzusammensetzung erhalten ist, **dadurch gekennzeichnet, dass** die Polymerzusammensetzung mindestens ein thermoplastisches Polymermaterial auf der Basis von Polypropylen umfasst und eine dielektrische Flüssigkeit, die mindestens ein Mineralöl und mindestens eine polare Verbindung vom Typ Benzophenon, Acetophenon oder ein Derivat davon umfasst.

2. Kabel nach Anspruch 1, **dadurch gekennzeichnet, dass** die dielektrische Flüssigkeit mindestens 70 Ma% Mineralöl in Bezug auf die Gesamtmasse der dielektrischen Flüssigkeit umfasst.

3. Kabel nach Anspruch 1 oder 2, **dadurch gekennzeichnet, dass** das Mineralöl aus den Naphthenölen und den Paraffinölen ausgewählt ist.

4. Kabel nach einem der vorangehenden Ansprüche, **dadurch gekennzeichnet, dass** die polare Verbindung vom Typ Benzophenon, Acetophenon oder ein Derivat davon mindestens 2,5 Ma% in Bezug auf die Gesamtmasse der dielektrischen Flüssigkeit darstellt.

5. Kabel nach einem der vorangehenden Ansprüche, **dadurch gekennzeichnet, dass** die polare Verbindung vom Typ Benzophenon, Acetophenon oder ein Derivat davon der folgenden Formel (I) entspricht:

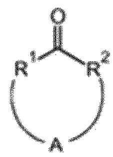

(I)

wobei $R^1$ und $R^2$, identisch oder unterschiedlich, Aryl-, Alkyl-, Alkylen-Aryl-Gruppen sind, wobei die Gruppen $R^1$ und $R^2$ zusammen durch das Element verbunden sein können, das eine Einfachbindung darstellt oder eine Gruppe $-(CH_2)_n-$ mit n gleich 1 oder 2.

6. Kabel nach Anspruch 5, **dadurch gekennzeichnet, dass** die Verbindung der Formel (I) Benzophenon, Dibenzosuberon, Fluorenon oder Anthron ist.

7. Kabel nach einem der vorangehenden Ansprüche, **dadurch gekennzeichnet, dass** das Verhältnis der Anzahl von aromatischen Kohlenstoffatomen zur Gesamtanzahl von Kohlenstoffatomen in der dielektrischen Flüssigkeit unter 0,3 beträgt.

8. Kabel nach einem der vorangehenden Ansprüche, **dadurch gekennzeichnet, dass** die dielektrische Flüssigkeit 1 bis 20 Ma% in Bezug auf die Gesamtmasse der Polymerzusammensetzung darstellt.

9. Kabel nach einem der vorangehenden Ansprüche, **dadurch gekennzeichnet, dass** das thermoplastische Polymermaterial auf der Basis von Polypropylen mindestens ein Homopolymer oder ein Propylen-Copolymer $P_1$ und mindestens ein Homopolymer oder ein Olefin-Copolymer a $P_2$ umfasst.

10. Kabel nach Anspruch 9, **dadurch gekennzeichnet, dass** das Propylen-Copolymer $P_1$ ein Ethylen-Propylen-Copolymer ist.

11. Kabel nach Anspruch 9 oder 10, **dadurch gekennzeichnet, dass** das Homopolymer oder Propylen-Copolymer $P_1$ 40 bis 70 Ma% des thermoplastischen Polymermaterials auf der Basis von Polypropylen darstellt.

12. Kabel nach einem der Ansprüche 9 bis 11, **dadurch gekennzeichnet, dass** das Homopolymer oder das Olefin-Copolymer $\alpha$ $P_2$ ein heterophasiges Copolymer ist, umfassend eine thermoplastische Phase vom Typ Propylen und eine thermoplastische Elastomerphase vom Typ Ethylencopolymer und eines Olefins a, ein Polyethylen oder ein Gemisch davon.

13. Kabel nach einem der Ansprüche 9 bis 12, **dadurch gekennzeichnet, dass** das Homopolymer oder Olefin-Copolymer $\alpha$ $P_2$ 30 bis 60 Ma% des thermoplastischen Polymermaterials auf der Basis von Polypropylen darstellt.

14. Kabel nach einem der vorangehenden Ansprüche, **dadurch gekennzeichnet, dass** die elektrisch isolierende Schicht eine nicht vernetzte Schicht ist.

15. Verfahren zur Herstellung eines elektrischen Kabels nach einem der vorangehenden Ansprüche, **dadurch gekennzeichnet, dass** es mindestens einen Schritt 1) des Extrudierens der Polymerzusammensetzung um ein längliches elektrisch leitendes Element umfasst, um eine elektrisch isolierende Schicht zu erhalten, die das längliche elektrisch leitende Element umgibt.

16. Verfahren nach Anspruch 15, **dadurch gekennzeichnet, dass** die Polymerzusammensetzung gemäß einem Verfahren hergestellt wird, das mindestens einen Schritt i) des Mischens des thermoplastischen Polymermaterials auf der Basis von Polypropylen mit der dielektrischen Flüssigkeit umfasst.

17. Verfahren nach Anspruch 16, **dadurch gekennzeichnet, dass** das Mischen gemäß den folgenden Unterschritten durchgeführt wird:

i-a) Mischen eines Mineralöls und mindestens einer polaren Verbindung vom Typ Benzophenon, Acetophenon

oder ein Derivat davon, um eine dielektrische Flüssigkeit zu bilden, und

i-b) Mischen des thermoplastischen Polymermaterials auf der Basis von Polypropylen mit der dielektrischen Flüssigkeit, wie im vorangegangenen Unterschritt i-a) erhalten.

## Claims

1. A cable comprising at least one elongate electrically conductive element and at least one electrically insulating layer obtained from a polymer composition, **characterized in that** the polymer composition comprises at least one polypropylene-based thermoplastic polymer material and a dielectric liquid comprising at least one mineral oil and at least one polar compound of benzophenone, acetophenone type or one of the derivatives thereof.

2. The cable according to claim 1, **characterized in that** the dielectric liquid comprises at least 70 weight % of mineral oil relative to the total weight of the dielectric liquid.

3. The cable according to claim 1 or 2, **characterized in that** the mineral oil is selected from among naphthenic oils and paraffinic oils.

4. The cable according to any of the preceding claims, **characterized in that** the polar compound of benzophenone, acetophenone type or one of the derivatives thereof represents at least 2.5 weight % relative to the total weight of the dielectric liquid.

5. The cable according to any of the preceding claims, **characterized in that** the polar compound of benzophenone, acetophenone type or one of the derivatives thereof meets following formula (I):

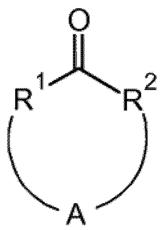

(I)

where $R^1$ and $R^2$, the same or different, are aryl, alkyl, alkylene-aryl groups, the groups $R^1$ and $R^2$ able to be linked together by element A representing a single bond or $-(CH_2)_n-$ group with n being 1 or 2.

6. The cable according to claim 5, **characterized in that** the compound of formula (I) is benzophenone, dibenzosuberone, fluorenone or anthrone.

7. The cable according to any of the preceding claims, **characterized in that** the ratio of the number of aromatic carbon atoms to the total number of carbon atoms in the dielectric liquid is less than 0.3.

8. The cable according to any of the preceding claims, **characterized in that** the dielectric liquid represents from 1 to 20 weight % relative to the total weight of the polymer composition.

9. The cable according to any of the preceding claims, **characterized in that** the polypropylene-based thermoplastic polymer material comprises at least one homopolymer or copolymer of propylene $P_1$, and at least one homopolymer or copolymer of olefin $\alpha$ $P_2$.

10. The cable according to claim 9, **characterized in that** the copolymer of propylene $P_1$ is a copolymer of propylene and ethylene.

11. The cable according to claim 9 or 10, **characterized in that** the homopolymer or copolymer of propylene $P_1$ represents from 40 to 70 weight % of the polypropylene-based thermoplastic polymer material.

12. The cable according to any of claims 9 to 11, **characterized in that** the homopolymer or copolymer of olefin $\alpha$ $P_2$ is a heterophasic copolymer comprising a thermoplastic phase of propylene type and a thermoplastic elastomer

phase of ethylene and olefin α copolymer type, a polyethylene or one of the mixtures thereof.

**13.** The cable according to any of claims 9 to 12, **characterized in that** the homopolymer or copolymer of olefin α $P_2$ represents from 30 to 60 weight % of the polypropylene-based thermoplastic polymer material.

**14.** The cable according to any of the preceding claims, **characterized in that** the electrically insulating layer is a non-crosslinked layer.

**15.** A method for manufacturing an electric cable such as defined in any of the preceding claims, **characterized in that** it comprises at least one step 1) to extrude the polymer composition around an elongate electrically conductive element, to obtain an electrically insulating layer surrounding said elongate electrically conductive element.

**16.** The method according to claim 15, **characterized in that** the polymer composition is prepared according to a method comprising at least one step i) to mix said polypropylene-based thermoplastic polymer material with said dielectric liquid.

**17.** The method according to claim 16, **characterized in that** mixing is performed with the following sub-steps:

i-a) mixing a mineral oil and at least one polar compound of benzophenone, acetophenone type or one of the derivatives thereof, to form a dielectric liquid; and
i-b) mixing said polypropylene-based thermoplastic polymer material with the dielectric liquid such as obtained at the preceding sub-step i-a).

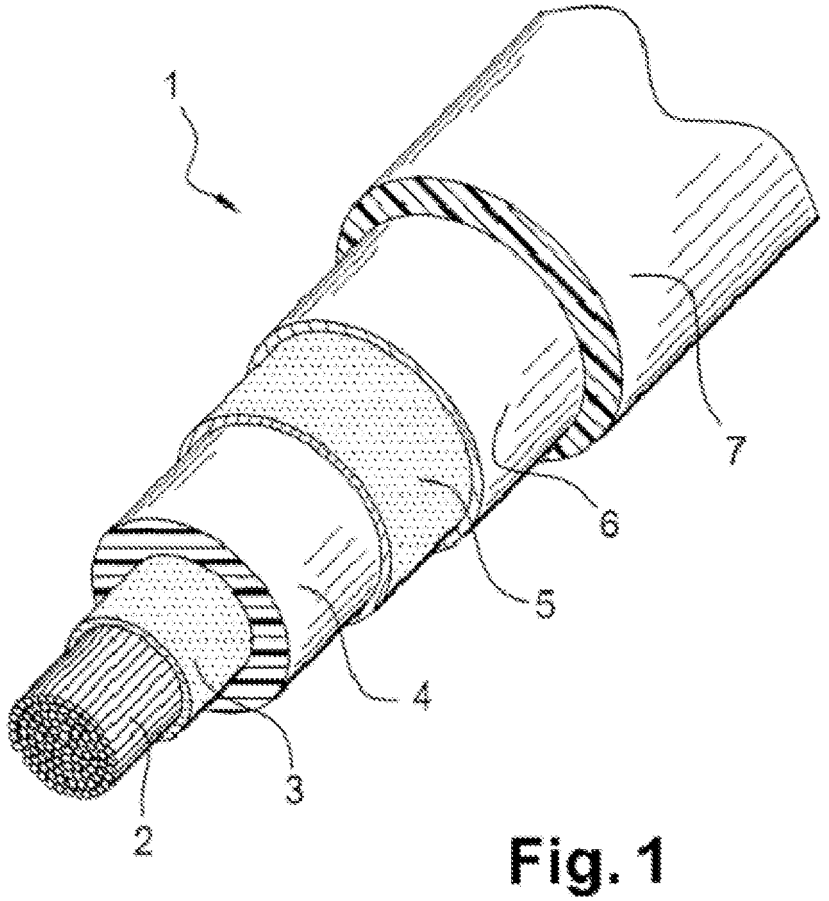


Fig. 1

**A)**

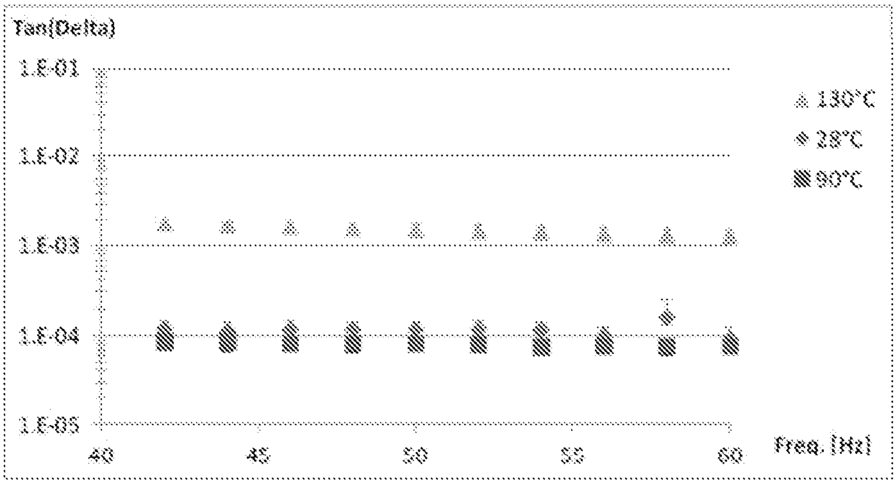
Tan(Delta)
1.E-01
1.E-02
1.E-03
1.E-04
1.E-05
40
45
50
55
60
Freq. [Hz]
130°C
90°C

**B)**

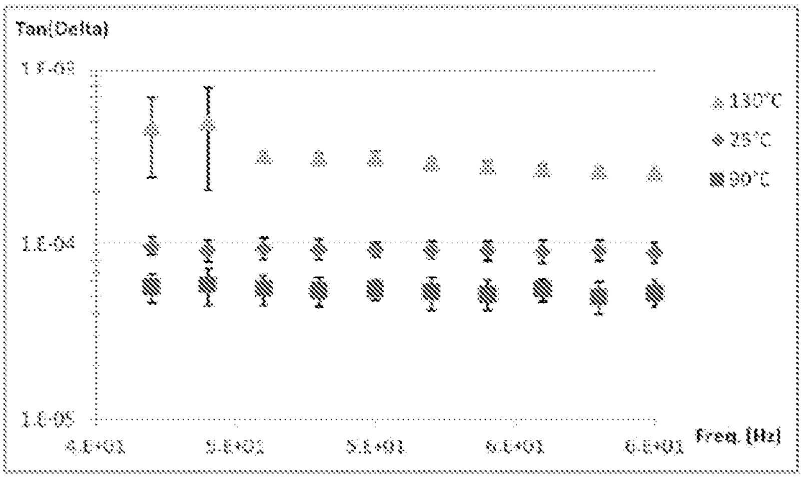
Tan(Delta)
1.E-04
1.E-05
Freq. [Hz]
130°C
90°C

# Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0203398 A1
- WO 2004066318 A1